# EUROPÄISCHE PATENTANMELDUNG

(11) **EP 0 821 042 A2**
(43) Veröffentlichungstag der Anmeldung: **28.01.1998**
(21) Anmeldenummer: 97112267.6
(22) Anmeldetag: 17.07.1997
(51) Int. Cl.: C09D 163/00

(54) **Elastisches selbstvernetzendes Bindemittel für Dosen- und Band- beschichtuung seine Herstellung und Verwendung**

(30) Priorität: 26.07.1996 DE 19630276
(71) Anmelder: Vianova Resins GmbH, 55252 Mainz-Kastel (DE)
(72) Erfinder: Neumann, Uwe, Dr., Mobile, Alabama 36695 (US); Oberressl, Paul, 65185 Wiesbaden (DE)

(57) **Zusammenfassung**

Elastisches, selbstvernetzendes Bindemittel, erhältlich durch Vermischen eines Polyester-modifizierten Epoxidharzes (A) und eines Säuregruppen-haltigen Polyesters (B), wobei das Epoxidharz (A) in zwei Schritten hergestellt wird, durch
(1) Synthese eines Polyesters (A1) mit freien Säuregruppen aus mehrbasigen Carbonsäuren (A11) ausgewählt aus aliphatischen Polycarbonsäuren (A111) und aromatischen Polycarbonsäuren (A112) und Polyolen (A12), und
(2) Umsetzen des Polyesters (A1) mit einem Epoxidharz (A2),
wobei die Stoffmenge der Epoxidgruppen in (A2) größer ist als die Stoffmenge der Carboxylgruppen in (A1), und der Polyester (B) wie der Polyester (A1) aus mehrbasigen Carbonsäuren (A11) ausgewählt aus aliphatischen Polycarbonsäuren (A111) und aromatischen Polycarbonsäuren (A112) und aliphatischen Polyolen (A12) durch Polykondensation hergestellt wird.

## Beschreibung

Diese Erfindung betrifft ein Epoxidgruppen enthaltendes, bei erhöhter Temperatur härtbares Kunstharz, ein Verfahren zu dessen Herstellung sowie dessen Verwendung als Bindemittel für Einbrennlacke, insbesondere für Emballagenlacke und ganz besonders für Lacke, die in Kontakt zu Nahrungsmitteln kommen.

Es ist bekannt, daß Epoxidharze mit sauren Polyestern bei Temperaturen im Bereich von 150 bis 200 °C zu sterilisationsfesten Lacken gehärtet werden könneri. Solche Bindemittel sind z.B. beschrieben in der Europäischen Patentanmeldung EP-A 0 547 502. Nachteilig ist ihre mangelnde Flexibilität.

Es wurde nun ein Bindemittel für Beschichtungsmischungen gefunden, das aus einer Mischung von einem Polyester-modifizierten Epoxidharz (A) und einem Säuregruppen-haltigen Polyester (B) besteht.

Überraschenderweise hat es sich gezeigt, daß die erfindungsgemäßen Mischungen eine hohe Reaktivität zeigen und eine erheblich bessere Flexibilität des eingebrannten Filmes ohne Verlust an Sterilisationsbeständigkeit und Chemikalienbeständigkeit besitzen, ohne daß die Viskosität der Mischung bei Raumtemperatur über Monate hinaus nennenswert steigt.

Das modifizierte Epoxidharz (A) wird in zwei Schritten synthetisiert:
(1) zunächst wird ein Polyester (A1) mit freien Säuregruppen aus mehrbasigen Carbonsäuren (A11) ausgewählt aus aliphatischen Polycarbonsäuren (A111) und aromatischen Polycarbonsäuren (A112) und Polyolen (A12) kondensiert;
(2) der Polyester (A1) wird im stöchiometrischen Unterschuß, bezogen auf das Verhältnis der Anzahl von Säure- zu Epoxidgruppen, entweder
(2a) mit einem Epoxidharz (A2) oder
(2b) mit einer Mischung aus einem Epoxidharz (A2) und einem Dihydroxyaromaten (A3) umgesetzt.

Dabei bedeutet 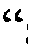 stöchiometrischer Unterschuß 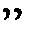 , daß die Stoffmenge der Epoxidgruppen in (A2) größer ist als die Stoffmenge der Carboxylgruppen in (A1). Der Säuregruppen-haltige Polyester (B) wird aus aliphatischen oder aromatischen Polycarbonsäuren (A11) und Polyalkoholen (A12) kondensiert.

Die erfindungsgemäßen Bindemittel sind aufgrund ihrer hohen Reaktivität, Lagerstabilität und Löslichkeit vielseitig verwendbar. Sie sind überall dort einsatzfähig, wo von Einbrenntemperaturen oberhalb 100 °C (vorzugsweise oberhalb 140 °C) Gebrauch gemacht wird, z.B. auf dem Gebiet der Lackierung, wie Grundierungen, Decklacke, Einschichtlacke, schocktrocknende Systeme für Coil-Coating und zum Lackieren von Konservendosen verbunden mit extremen Verformbarkeitsanforderungen, wie zum Beispiel als Ersatz für PVC, das für Beschichtungen von Emballagen benutzt wird.

Die hohe Reaktivität der Bindemittel zeigt sich besonders, wenn in sehr kurzen Zeiten, z.B. 1 bis 3 Minuten, und bei verhältnismäßig hohen Temperaturen, z.B. 230 bis 300 °C (Objekttemperatur) eingebrannt wird.

Durch Zusatz von Katalysatoren kann die Reaktivität noch erheblich gesteigert werden. Dies wirkt sich besonders günstig auf die notwendige Einbrennzeit, aber auch auf die erforderliche Einbrenntemperatur aus. Geeignete Katalysatoren, die gegebenenfalls z.B. in einem Massenanteil von 0,01 bis 5, vorzugsweise 0,05 bis 1,5 %, bezogen auf die Masse des Festkörpers, zugegen sein können, sind z.B. Alkalisalze oder basische Katalysatoren anorganischer oder organischer Natur, z.B. Lithium-, Natrium- oder Kaliumsalze von organischen und anorganischen Säuren, wie Ameisen-, Essig-, Benzoe-, 2-Äthylhexansäure und anderen aliphatischen und aromatischen Carbonsäuren mit 1 bis 20 Kohlenstoffatomen, Borsäure, Schwefelsäure, Phosphorsäure, saure Phosphorsäureester wie Monobutylphosphat, Dibutylphosphat und andere Mono- und Dialkylphosphate, Titanverbindungen wie Tetraisopropyltitanat und Tetrabutyltitanat, Zinnverbindungen wie Zinn-II-octoat, Dibutylzinnoxid, Dibutylzinndichlorid und Dibutylzinndilaurat, und organische Basen, wie Trialkylamine, z.B. Tributylamin, Triäthanolamin, Benzyldimethylamin, cyclische Basen, wie Diazabicyclooctan, Imidazol, Aryl- und Alkylimidazole, Imidazoline, organische und anorganische Phosphorverbindungen, z.B. Triphenylphosphit, Alkyl- und Aryl-Phosphonsäuren, Phosphonsäuremonoester aliphatischer Alkohole, Sulfonsäuren, wie p-Toluolsulfonsäure, 1,5-Naphthalindisulfonsäure, Heteropolysäuren wie Molybdän- und Wolfram-Phosphorsäuren, jeweils einzeln oder im Gemisch, z. B. Kombinationen der vorgenannten basisch reagierenden Verbindungen mit anderen der vorgenannten Katalysatoren.

Die Beschichtungen können auf einer Vielzahl von Substraten erfolgen, sofern diese den Härtungstemperaturen des Überzugs standhalten. Geeignete Substrate sind z.B.: Keramik, Holz, Glas, Beton, Kunststoffe, vorzugsweise Metalle, wie Eisen, Zinn, Titan, Kupfer, Aluminium, Stahl, Weißblech, Zinn-freier Stahl ( 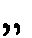 tin-free-steel 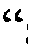 ), Messing, Bronze, Magnesium oder dergleichen, wobei die Substrate (Metalle) alleine oder im Verbund, vorbehandelt oder nichtvorbehandelt eingesetzt werden können. Als Vorbehandlungen kommen z.B. in Betracht: geeignete thermische, mechanische und/oder chemische Vorbehandlungen zur Erhöhung der Haftfestigkeit bzw. Korrosionsbeständigkeit. Die erfindungsgemäßen Bindemittel zeichnen sich aber auch durch hervorragende Haftung auf nicht vorbehandelten Metallsubstraten aus.

Die erfindungsgemäßen Bindemittel eignen sich vor allem zur Herstellung von korrosionsschützenden, chemikalienresistenten, sterilisationsfesten Überzügen und/oder Zwischenbeschichtungen und für die verschiedensten Anwendungsgebiete, wie z.B.: Auskleiden von Gegenständen, die mit aggressiven Medien wie Treibstoffen, Lösungsmitteln oder Lebensmitteln in Berührung (auch über längere Zeit) kommen.

Ein besonders bevorzugtes Anwendungsgebiet sind pigmentierte oder farblose Einschichtlackierungen von Blechen, die durch nachträgliches Tiefziehen, Abkanten, Profilieren, Prägen und dergleichen in ihre Gebrauchsform gebracht werden. Hierbei kommt es auf eine große Flexibilität an, die bislang nur von PVC-Plastisolen erreicht wird. Verwendungszweck sind zum Beispiel Aufreißdeckel für Getränkedosen ( 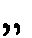 easy-open-ends 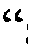 ) oder auch zwei- oder dreiteilige Blechemballagen für Getränke oder Nahrungsmittel inklusive Tiernahrungen.

Die erfindungsgemäßen Bindemittel eignen sich vor allem, bei entsprechender Wahl der Komponenten (A) und (B), für Anwendungen, wo in dünner Schicht (0,5 bis 20 µm, vorzugsweise 2 bis 10 µm, und ganz besonders bevorzugt 3 bis 8 µm), z.B. durch Tiefziehen, hervorragende Sterilisationsfestigkeiten erzielt werden müssen.

Die Bindemittel können alleine, als Gemisch mehrerer erfindungsgemäßer Bindemittel und/oder in Kombination mit anderen zweckentsprechenden Bindemitteln und/oder Polymeren, bzw. Fließmitteln, Haftmitteln, Katalysatoren und/oder dergleichen, dem Fachmann bekannten Additiven eingesetzt werden.

Zur Kombination geeignete Bindemittel sind OH-Gruppenhaltige Amin-, Harnstoff, Melamin-, Guanamin-, Novolak-, und insbesondere Phenolharze und OH-Gruppenhaltige Polyester bzw. Homo- und/oder Copolymerisate z.B. auf Acrylat-, Polyurethan- oder Polyester-Basis. Die Kombinationspartner können, bei geeigneter Wahl, in Massenanteilen von insgesamt 50 %, vorzugsweise 30 %, und ganz besonders bevorzugt bis zu 10 % bezogen auf die Masse der Mischung zugeschlagen werden.

Die Bindemittel können als Klarlack, Pulverlack und/oder unter Verwendung geeigneter (säurefester) Pigmente und Füllstoffe appliziert (Spritzen, Walzen, Tauchen) werden. Als Pigmente und Füllstoffe werden beispielsweise genannt: Titandioxid, Graphit, Ruß, Zinkchromat, Strontiumchromat, Bariumchromat, Bleichromat, Bleicyanamid, Bleisilikochromat, Calciummolybdat, Manganphosphat, Zinkoxid, Cadmiumsulfid, Chromoxid, Zinksulfid, Nickeltitangelb, Chromtitangelb, Eisenoxidschwarz, Eisenoxidrot, Ultramarinblau, Phthalocyaninkomplexe, Naphtholrot oder dergleichen. Dabei ist es überraschenderweise ohne Belang, ob die farbgebenden Pigmente anorganischer oder organischer Natur sind. Ferner sind metallische Pigmente oder solche mit metallartigem Aussehen, wie Aluminium, Aluminium-Bronzen verschiedener Farbtönung, Kupfer, Wolfram-Bronzen, Antimon- und Arsensulfidbronzen geeignet, die für die sogenannten "Metallic-Lacke" in Frage kommen. Geeignete Füllstoffe sind z. B. Talkum, Glimmer, Kaolin, Kreide, Quarzmehl, Asbestmehl, Schiefermehl, Bariumsulfat, Silikate, Glasfasern und organische Fasern.

Die Herstellung des Säuregruppen-haltigen Polyesters (A1) erfolgt in schon bekannter Weise durch Kondensation in der Schmelze oder durch azeotrope Destillation des Reaktionswassers mit geeigneten Schleppmitteln. Die sauren Polyester werden entweder direkt aus den freien Säuren oder deren Anhydriden und (einem stöchiometrischen Unterschuß an) Alkoholen unter Verwendung von Katalysatoren bei Temperaturen von 140 bis 250 °C hergestellt, oder es wird zunächst nach dem gleichen Verfahren ein Polyester mit freien OH-Gruppen hergestellt, der in einem nachfolgendem Schritt mit einem cyclischen Carbonsäureanhydrid zu einem saurem Polyester umgesetzt wird.
Im Einzelfall können statt eines Polyesters (A1) auch einfache mehrbasige Carbonsäuren (A11), oder deren reaktive Derivate, ausgewählt aus aliphatischen (A11) und aromatischen (A112) Polycarbonsäuren, bevorzugt Dicarbonsäuren, verwendet werden. Als Katalysatoren für die Kondensation kommen oben genannte Verbindungen in Frage.

Verwendung finden bei der Synthese des Polyesters (A1) aromatische (A112) sowie gesättigte lineare und verzweigte aliphatische oder cycloaliphatische Polycarbonsäuren (A111) und deren Anhydride oder andere reaktive Derivate mit bevorzugt 4 bis 40 Kohlenstoffatomen, die sämtlich frei von äthylenischen Doppelbindungen sind.

Bevorzugte aromatische Polycarbonsäuren (A112) sind Derivate des Benzols und/oder des Naphthalins und/oder des Benzophenons, wie Terephthalsäure, Isophthalsäure, Phthalsäure, Trimesinsäurem Trimellithsäure, Benzol-1,2,3-tricarbonsäure, Pyromellithsäure, Naphthalin-1,4-dicarbonsäure, Naphthalin-2,3- und -2,6-dicarbonsäure, Naphthalin-1,8-dicarbonsäure, Naphthalin-1,4,5,8-tetracarbonsäure, Benzophenon-4,4'-dicarbonsäure, Benzophenon-3,3'-dicarbonsäure oder Benzophenon-3,3',4,4'-tetracarbonsäure, bzw. soweit verfügbar, deren Anhydride.

Bevorzugte gesättigte aliphatische Polycarbonsäuren (A111) sind Bernsteinsäure, Dodecenylbernsteinsäure, Adipinsäure, 2,2,4-Trimethyladipinsäure, 2,4,4-Trimethyladipinsäure, Glutarsäure, Butan-1,2,3,4-tetracarbonsäure, Zitronensäure, Pimelinsäure, Korksäure, Azelainsäure, Suberinsäure, Sebacinsäure, Dodecandisäure oder sogenannte Dimere Fettsäuren, die aus natürlich vorkommenden einfach ungesättigten Fettsäuren hergestellt werden und als Dimere dann gesättigt sind.

Bevorzugte gesättigte cycloaliphatische Polycarbonsäuren (A111) sind Hexahydrophthalsäure, Hexahydroisophthalsäure, Hexahydroterephthalsäure, Tetrahydrophthalsäure, Bi-cyclo(2.2.1)-hept-5-en-2,3-dicarbonsäure, Tetrahydrofuran-2,3,4,5-tetracarbonsäure, Cyclopentan-1,2,3,4-tetracarbonsäure oder Methylhexahydrophthalsäure, bzw. soweit verfügbar, deren Anhydride.

Die vorstehenden polyfunktionellen Carbonsäuren können einzeln oder im Gemisch eingesetzt werden. Gegebenenfalls können sie auch in Gemischen mit untergeordneten Anteilen (bis zu 10 % der Stoffmenge) Monocarbonsäuren eingesetzt werden.

An Polyolen (A12) für die Synthese der Polyester seien genannt: lineare und verzweigte aliphatische Alkohole mit 2 bis 15 Kohlenstoffatomen und zwei Hydroxylgruppen wie Äthan-1,2-diol, Propan-1,2-diol, Propan-1,3-diol, 2,2-Dimethyl-propan-1,3-diol, 2-Äthyl-2-methyl-propan-1,3-diol, Butal-1,4-diol, Butan-1,3-diol, Hexan-1,6-diol, Dodecan-1,12-diol, Bis-(4-hydroxycyclohexyl)-methan, 2,2-Bis-(4-(2-hydroxy-äthoxy)-phenyl)-propan, 3(4),8(9)-Bis-(hydroxymethyl)-tricyclo(5.2.1.0^{2,6})-decan, höherwertige aliphatische Alkohole mit 3 bis 15 Kohlenstoff-Atomen, die in einem Stoffmengenanteil von bis zu 5 %, bezogen auf die Summe der Stoffmengen aller Polyole, zugegen sein können, wie 1,1,1-Trimethyloläthan, 1,1,1-Trimethylolpropan, Pentaerythrit, Dipentaerythrit, Glycerin und Diglycerin, aliphatische Ätheralkohole wie Bis-(2,2-bis-(hydroxymethyl)-butyl)-äther, Di- und Triäthylenglykol, cyclische Alkohole mit 2 bis 15 Kohlenstoff-Atomen wie 1,4-Bis-(hydroxymethyl)-cyclohexan, Polyole, die zusätzlich noch andere funktionelle Gruppen wie Carboxyl-, Sulfuryl- oder Phosphorylgruppen tragen wie 2,2-Bis-(hydroxymethyl)-propionsäure, gegebenenfalls zusammen mit einwertigen Alkoholen wie Butanol, Octanol, Laurylalkohol, äthoxylierten oder propoxylierten Phenolen oder Alkylphenolen bzw. Fettalkoholen, jeweils einzeln oder im Gemisch. Dabei werden die einwertigen Alkohole in einer solchen Menge eingesetzt, daß ihr Stoffmengenanteil bis zu 5 % beträgt, bezogen auf die Summe der Stoffmengen aller zur Synthese der Polyester eingesetzten Hydroxylgruppen-haltigen Verbindungen.

Der Polyester (A1) hat eine Säurezahl (SZ) von 40 bis 800, vorzugsweise 80 bis 560, ganz besonders bevorzugt 100 bis 200 mg/g. (Die Säurezahl, gemessen in mg/g, gibt das Verhältnis derjenigen Masse von Kaliumhydroxid *m*_{KOH} in mg, die zur Neutralisation einer Masse *m*_{B} einer Substanz B erforderlich ist, zu dieser Masse *m*_{B} in g an.) Im zweiten Reaktionsschritt wird der Polyester in einem Lösungsmittel oder in der Schmelze im stöchiometrischen Unterschuß entweder (a) mit einem Epoxidharz oder Epoxidharzgemisch (A2) oder (b) mit einem Epoxidharz oder Epoxidharzgemisch (A2) und einem Dihydroxyaromaten (A3) umgesetzt. Das Verhältnis der Anzahl der Säuregruppen zur Anzahl der Epoxidgruppen gemäß Verfahren (a) beträgt 1 : 10 bis 1 : 50, besonders bevorzugt 1 : 15 bis 1 : 30.

Im Verfahren (b) beträgt das Verhältnis der Anzahl der Säuregruppen zur Anzahl der Epoxidgruppen 1 : 10 bis 1 : 50, besonders bevorzugt 1 : 15 bis 1 : 30, und das Verhältnis der Anzahl der aromatischen Hydroxylgruppen zur Anzahl der Epoxidgruppen beträgt 1 : 1,1 bis 1 : 5, vorzugsweise 1 : 1,2 bis 1 : 4.

Im Einzelfall kann statt eines Polyesters (A1) auch eine mehrbasige Carbonsäure (A11), bevorzugt eine Dicarbonsäure aus den oben genannten Beispielen verwendet werden.

Bevorzugte Epoxide (A2) sind vorwiegend Epoxidverbindungen mit mehr als einer Epoxidgruppe pro Molekül. Aus der großen Zahl der polyfunktionellen Epoxide, die mehr als eine Oxirangruppe im Molekül enthalten, seien genannt: die Glycidyläther mehrwertiger Phenole, bevorzugt einkerniger Hydroxyaromaten mit mindestens zwei Hydroxylgruppen und mehrkerniger Aromaten mit mindestens zwei Hydroxygruppen, wobei die aromatischen Kerne über eine direkte Bindung, eine Äther-, Thioäther-, Carbonyl-, Sulfon-, Carboxylat- oder Carbonamidbrücke miteinander verbunden sind, und die aromatischen Kerne ausgewählt sind aus Benzol-, Naphthalin- und Anthracen-Kernen (Resorcin, Hydrochinon, Bis-(4-hydroxyphenyl)-methan, Bis-(4-hydroxy-3-methylphenyl)-methan, Bis-(4-hydroxy-3,5-dibromphenyl)-methan, 2,2-Bis-(4-hydroxyphenyl)-propan, 1,1-Bis-(4-hydroxyphenyl)-cyclohexan, sowie der Phenol-Formaldehyd-Kondensationsprodukte) und mehrwertiger Alkohole (Butandiole, Hexandiole, Glycerin, Pentaerythrit, Zuckeralkohole und andere). Es können auch Oligomere der oben beschriebenen Epoxidharze zum Einsatz kommen. Besonders bevorzugt sind Epoxidharze auf Basis 2,2-Bis-(4-hydroxyphenyl)-propan (Bisphenol A) mit einer gewichtsmittleren molaren Masse M_{w} von 340 bis 8.000 g/mol und auf Basis Bis-(hydroxyphenyl)-methan (p,p- und o,o-Isomerengemisch, bekannt als Bisphenol F) mit einer gewichtsmittleren molaren Masse M_{w} von 312 bis 8.000 g/mol. Weiter sind auch die Glycidylester von mehrbasigen Carbonsäuren (A11) geeignet. Die vorstehenden polyfunktionellen Epoxide können einzeln oder im Gemisch eingesetzt werden. Gegebenenfalls können sie auch in Gemischen mit Monoepoxiden eingesetzt werden, wobei bis zu 10 % der Stoffmenge der höherfunktionellen Epoxidverbindungen durch Monoepoxide ersetzt werden können.

Bevorzugte Dihydroxyaromaten (A3) sind ein- oder mehrkernige aromatische Verbindungen mit zwei Hydroxylgruppen pro Molekül und 6 bis 15 Kohlenstoffatomen. Aus der großen Zahl der Dihydroxyaromaten seien genannt: Resorcin, Hydrochinon, Bis-(4-hydroxyphenyl)-methan, Bis-(2-hydroxyphenyl)-methan, 2-Hydroxyphenyl-4'-hydroxyphenyl-methan, das Isomerengemisch aus Bis-hydroxyphenyl-methanen, bekannt unter der Bezeichnung Bisphenol F, Bis-(4-hydroxy-3-methylphenyl)-methan, 2,2-Bis-(4-hydroxyphenyl)-propan, bekannt unter der Bezeichnung Bisphenol A und 1,1-Bis-(4-hydroxyphenyl)-cyclohexan. Die vorstehenden Hydroxyaromaten können einzeln oder im Gemisch eingesetzt werden. Besonders bevorzugt sind Bisphenol A und Bisphenol F.

Die Herstellung des Säuregruppen-haltigen Polyesters (B) erfolgt analog den oben beschriebenen Verfahren für den Polyester (A1). Im Wesentlichen können die gleichen Carbonsäuren und Alkohole, wie unter (A1) genannt, zur Verwendung kommen. Besonders bevorzugt sind Polyester auf Basis Trimellithsäureanhydrid und 1,2-Äthylenglykol, 1,2-Propylenglykol oder Glycerin (wobei die Alkohole einzeln oder im Gemisch eingesetzt werden können). Nach dieser Veresterung werden vorhandene Anhydridgruppen mit einer stöchiometrischen Mischung aus äthoxylierten oder propoxylierten Phenolen oder Alkylphenolen bzw. Fettalkoholen, jeweils einzeln oder im Gemisch und Wasser verseift. Der Polyester hat eine Säurezahl von 150 bis 800, besonders bevorzugt von 200 bis 550 mg/g.

Als Lösungsmittel für die oben beschriebenen Bindemittel können aprotische, polare Lösungsmittel wie zum Beispiel
Ketone: Butanon, 4-Methyl-pentan-2-on, Isophoron, 3,3,5-Trimethyl-cyclohexanon, 2,6-Dimethyl-heptan-4-on, 2,4-Dimethyl-pentan-3-on, 2-Methoxy-2-methyl-pentan-4-on oder 3-Pentanon;
Äther: 1,2-Dimethoxy-äthan, Diäthylenglykoldimethyläther, Dipropylenglykoldimethyläther oder Propylenglykoldibutyläther;
Ester: Pivalinsäureäthylester, 1-Äthoxy-propyl-2-acetat, 1-Methoxy-propyl-2-acetat, 3-Äthoxypropionsäureäthylester oder 1,2-Propylendiacetat verwendet werden. Bewährt haben sich auch Gemische aus aliphatischen Alkoholen mit 2 bis 10 Kohlenstoff-Atomen und aromatischen Kohlenwasserstoffen, vorzugsweise ein- oder mehrfach alkylierte Benzole mit 1 bis 10 Kohlenstoff-Atomen in der Alkylgruppe, wie zum Beispiel 2-Butanol/Xylol, 4-Methyl-pentan-2-ol/®Solvesso 150, 2-Pentanol/®Solvesso 100. (Unter dem Handelsnamen 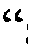 ®Solvesso 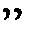 vertreibt die Firma Exxon Chemical Gemische von alkylierten aromatischen Kohlenwasserstoffen, die sich in ihrem Siedebereich unterscheiden.) Es kommen auch Gemische der oben erwähnten Lösungsmittel zum Einsatz. Der Massenanteil an Lösungsmitteln in der Lösung von (A) und (B) beträgt vorzugsweise 5 bis 60 %.

Als Katalysatoren für die Härtung des Lackes können die oben als Katalysator für die Kondensationsreaktion beschriebenen zum Einsatz kommen.

Die Komponenten (A) und (B) werden bei 50 bis 120 °C im Massenverhältnis (bezogen auf Festharz) 95 : 5 bis 40 : 60, bevorzugt 80 : 20 bis 90 : 10, homogen vermischt. Danach ist das Bindemittel gebrauchsfähig.

### Beispiele für die erfindungsgemäße Herstellung der Bindemittel:

### Beispiel 1

### Komponente A:

Man läßt 620 g Beckopox® EP 140 (Bisphenol-A-diglycidyläther mit einem spezifischen Epoxidgruppen-Gehalt von 5525 mmol/kg (EV-Wert 181 g/mol, Vianova Resins GmbH), 50 g Pripol® 1009 (Dimere Fettsäure, η = 8.000 mPas bei 25 °C, SZ 196 mg/g, Unichema Chemie GmbH) und 300 g Bisphenol A unter Triphenylphosphan-Katalyse bei 160 °C reagieren bis zu einem spezifischen Epoxidgruppengehalt von 625 mmol/kg (Epoxidäquivalent von 1600 g/mol). Man nimmt mit soviel Äthoxypropylacetat auf, daß eine 55%ige Lösung entsteht.

### Komponente B:

351 g Trimellithsäureanhydrid (1,83 mol) und 76 g Propylenglykol (1,00 mol) werden mit Xylol azeotrop verestert. Nach neun Stunden findet man folgende Säurezahlen: alkoholisch: 251 mg/g, wäßrig: 530 mg/g. Der Polyester wird mit soviel Äthoxypropylacetat aufgenommen, daß eine 50%ige Lösung entsteht, und anschließend mit 5,9 g Genapol T-050 (Fettalkohol, Basis C₁₆-C₁₈, mit durchschnittlich 5 mol/mol Äthylenoxid, Hoechst AG) und der stöchiometrischen Menge Wasser bei 80 °C umgesetzt, um die restlichen Anhydridringe zu spalten. Bei dieser Temperatur wird gehalten, bis die Säurezahlen (alkoholisch und wäßrig) übereinstimmen. Anschließend wird mit 3-Äthoxy-propionsäure-äthylester auf 45% Festkörper-Massenanteil verdünnt.

### Bindemittel:

Die Lösungen der Komponenten A und B werden schließlich im Massenverhältnis der jeweiligen Feststoffe von 10,0 : 1,0 gemischt und mit Äthoxypropylacetat auf eine 50%ige Lösung eingestellt. Danach ist das Bindemittel gebrauchsfähig.

### Beispiel 2

### Komponente A:

Man läßt 489 g Beckopox® EP 140 (Bisphenol-A-diglycidyläther mit einem spezifischen Epoxidgruppen-Gehalt von 5525 mmol/kg (EV-Wert 181 g/mol), Vianova Resins GmbH), 25 g Sebacinsäure und 226 g Bisphenol A unter Triphenylphosphan-Katalyse bei 160 °C reagieren bis zu einem spezifischen Epoxidgruppengehalt von 625 mmol/kg (Epoxidäquivalent von 1600 g/mol). Man nimmt mit soviel 3-Äthoxy-propionsäure-äthylester auf, daß eine 55%ige Lösung entsteht.

### Komponente B:

373 g Trimellithsäureanhydrid (1,94 mol) und 62 g Äthylenglykol (1,00 mol) werden mit Xylol azeotrop verestert. Nach neun Stunden findet man folgende Säurezahlen: alkoholisch: 247; wäßrig: 521 mg/g. Der Polyester wird mit soviel 3-Äthoxy-propionsäure-äthylester aufgenommen, daß eine 50%ige Lösung entsteht, und anschließend mit 6,1 g ®Arcopal N 090 (Nonylphenol, mit durchschnittlich 9 mol/mol Äthylenoxid, Hoechst AG) und der stöchiometrischen Menge Wasser bei 80 °C umgesetzt, um die restlichen Anhydridringe zu spalten. Bei dieser Temperatur wird gehalten, bis die Säurezahlen (alkoholisch und wäßrig) übereinstimmen. Anschließend wird mit 3-Äthoxy-propionsäure-äthylester auf 45% Festkörper-Massenanteil verdünnt.

### Bindemittel:

Die Lösungen der Komponenten A und B werden schließlich im Massenverhältnis der jeweiligen Feststoffe von 10,0 : 1,0 gemischt und mit Äthoxypropylacetat auf eine 50%ige Lösung eingestellt. Danach ist das Bindemittel gebrauchsfähig.

### Beispiel 3

### Komponente A:

257 g 1,4-Butandiol und 848 g Sebacinsäure werden unter Katalyse von 1 g Dibutylzinnoxid bis zu einer Säurezahl von 150 mg/g verestert. 38 g dieses Polyesters werden mit 487 g ®Beckopox EP 140 (Bisphenol-A-diglycidyläther mit spezifischem Epoxidgruppengehalt von 5525 mmol/kg (EV-Wert 181 g/mol), Vianova Resins GmbH) und 240 g Bisphenol A unter Triphenylphosphan-Katalyse bei 160 °C umgesetzt bis zu einem spezifischen Epoxidgruppen-Gehalt von 625 mmol/kg (Epoxidäquivalent von 1.600 g/mol). Man nimmt mit soviel Äthoxypropylacetat auf, daß eine 55%ige Lösung entsteht.

### Komponente B:

374 g Trimellithsäureanhydrid (1,95 mol), 73 g Propylenglykol (0,96 mol) und 14 g Glycerin (0,15 mol) werden mit Xylol azeotrop verestert. Nach neun Stunden findet man folgende Säurezahlen: alkoholisch: 235; wäßrig: 475 mg/g. Der Polyester wird mit soviel Äthoxypropylacetat aufgenommen, daß eine 50%ige Lösung entsteht, und anschließend mit 6,4 g ®Sapogenat T-080 (Tributylphenol, mit durchschnittlich 8 mol/mol Äthylenoxid, Hoechst AG) und der stöchiometrischen Menge Wasser bei 80 °C umgesetzt, um die restlichen Anhydridringe zu spalten. Bei dieser Temperatur wird gehalten, bis die Säurezahlen (alkoholisch und wäßrig) übereinstimmen. Anschließend wird mit 3-Äthoxy-propionsäureäthylester auf 45% Festkörpergehalt verdünnt.

### Bindemittel:

Die Lösungen der Komponenten A und B werden schließlich im Massenverhältnis der jeweiligen Feststoffe von 11,1 : 1,0 gemischt und mit Äthoxypropylacetat auf einen Feststoff-Massengehalt von 50% in der Lösung eingestellt. Danach ist das Bindemittel gebrauchsfahig.

### Beispiel 4

### Komponente A:

432 g 1,4-Butandiol und 683 g Sebacinsäure werden unter Katalyse von 0,7 g Dibutylzinnoxid bis zu einer OH-Zahl von 145 mg/g verestert. (Die OH-Zahl ist der Quotient derjenigen Masse an Kaliumhydroxid *m*_{KOH} in mg, die dieselbe Stoffmenge an Hydroxylgruppen aufweist wie eine Masse *m*_{B} der Substanz B, und dieser Masse *m*_{B}.) 546 g dieses hydroxyfunktionellen Polyesters werden mit 141 g Bernsteinsäureanhydrid auf 160 bis 200 °C erwärmt, bis die Säurezahlen (alkoholisch und wäßrig: 115 mg/g) übereinstimmen. 19 g dieses sauren Polyesters werden mit 249 g ®Beckopox EP 140 (Bisphenol-A-diglycidyläther mit spezifischem Epoxidgruppen-Gehalt von 5525 mmol/kg (EV-Wert 181 g/mol), Vianova Resins GmbH) und 114 g Bisphenol A unter Triphenylphosphan-Katalyse bei 160 °C bis zu einem spezifischen Epoxidgruppen-Gehalt von 909 mmol/kg (Epoxidäquivalent von 1100 g/mol) umgesetzt. Man nimmt mit soviel Äthoxypropylacetat auf daß eine 55%ige Lösung entsteht.

### Komponente B:

374 g Trimellithsäureanhydrid (1,95 mol), 73 g Propylenglykol (0,96 mol) und 14 g Glycerin (0,15 mol) werden mit Xylol azeotrop verestert. Nach neun Stunden findet man folgende Säurezahlen: alkoholisch: 235; wäßrig: 475 mg/g. Der Polyester wird mit soviel Äthoxypropylacetat aufgenommen, daß eine 50%ige Lösung entsteht, und anschließend mit 6,4 g ®Sapogenat T-080 (Tributylphenol, mit durchschnittlich 8 mol/mol Äthylenoxid, Hoechst AG) und der stöchiometrischen Menge Wasser bei 80 °C umgesetzt, um die restlichen Anhydridringe zu spalten. Bei dieser Temperatur wird gehalten, bis die Säurezahlen (alkoholisch und wäßrig) übereinstimmen. Anschließend wird mit 3-Äthoxy-propionsäure-äthylester auf 45% Festkörper-Massenanteil verdünnt.

### Bindemittel:

Die Lösungen der Komponenten A und B werden schließlich im Verhältnis der Massen der jeweiligen Feststoffe von 11,1 : 1,0 gemischt und mit Äthoxypropylacetat auf eine 50%ige Lösung eingestellt. Danach ist das Bindemittel gebrauchsfähig.

### Anwendungstechnische Ansprüfung

Mit den oben genannten Bindemitteln wurde ein Weißlack gefertigt und in 5-6 µm Stärke auf Weißblech 12 min bei 190°C eingebrannt. Der Weißlack setzt sich wie folgt zusammen:
- 100: Teile Bindemittel
- 50: Teile Titandioxid CL 23-10 (Kronos)
- 40: Teile Äthoxypropylacetat
- 0,5: Teile Phosphorsäure 40%ig

Als Vergleich dient ®Beckopox VEM 2438, Basis wie Komponente B im Beispiel 3 und ®Beckopox EP 307, ein Epoxidharz auf Basis Bisphenol A mit einem spezifischen Epoxidgruppen-Gehalt von 500 bis 590 mmol/kg (Epoxidäquivalent von 1.700 bis 2.000 g/mol).

| | **Erfindungsgemäße Bindemittel** | | | | **Vergleich Beckopox VEM 2438** |
|---|---|---|---|---|---|
| | **Beispiel 1** | **Beispiel 2** | **Beispiel 3** | **Beispiel 4** | |
| Verlauf | 2 | 1 - 2 | 2 | 1 - 2 | 1 - 2 |
| Glanz 60 ° (a) | 95 | 96 | 95 | 98 | 96 |
| Haftung ( (b) (Gitterschnitt) | 0 | 0 | 0 | 0 | 0 |
| Schlagtiefung (c) (inch·pound) | > 40 | > 40 | > 40 | > 40 | > 40 |
| Aceton-Test (Doppelwischungen) | > 100 | > 100 | > 100 | > 100 | > 100 |
| wedge-bend % i.O. | 95 | 100 | 95 | 95 | 45 |
| Sterilisationsfestigkeit (d) | i.O. | i.O. | i.O. | i.O. | i.O. |

| | | | | | |
|---|---|---|---|---|---|
| (a) nach Lange | | | | | |
| (b) DIN 53 151 | | | | | |
| (c) DIN 55 669 | | | | | |
| (d) in 2%iger Milchsäure, 1 h bei 129 °C (= 1,5 bar) | | | | | |
| i.O. in Ordnung, ohne Fehler Benotung von 0 (am besten) bis 5 (am schlechtesten) | | | | | |

## Patentansprüche

1. Elastisches, selbstvernetzendes Bindemittel, erhältlich durch Vermischen eines Polyester-modifizierten Epoxidharzes (A) und eines Säuregruppen-haltigen Polyesters (B), wobei das Epoxidharz (A) in zwei Schritten hergestellt wird, durch
(1) Synthese eines Polyesters (A1) mit freien Säuregruppen aus mehrbasigen Carbonsäuren (A11) ausgewählt aus aliphatischen Polycarbonsäuren (A111) und aromatischen Polycarbonsäuren (A112) und Polyolen (A12), und
(2) Umsetzen des Polyesters (A1) mit einem Epoxidharz (A2),
wobei die Stoffmenge der Epoxidgruppen in (A2) größer ist als die Stoffmenge der Carboxylgruppen in (A1), und der Polyester (B) wie der Polyester (A1) aus mehrbasigen Carbonsäuren (A11) ausgewählt aus aliphatischen Polycarbonsäuren (A111) und aromatischen Polycarbonsäuren (A112) und aliphatischen Polyolen (A12) durch Polykondensation hergestellt wird.

2. Bindemittel nach Anspruch 1, dadurch gekennzeichnet, daß im Schritt (2) der Polyester (A1) mit einer Mischung aus einem Epoxidharz (A2) und einem Dihydroxyaromaten (A3) umgesetzt wird.

3. Bindemittel nach Anspruch 1, dadurch gekennzeichnet, daß an Stelle der Polyester (A1) mehrbasige Carbonsäuren (A11) ausgewählt aus aliphatischen Polycarbonsäuren (A111) und aromatischen Polycarbonsäuren (A112) oder deren reaktive Derivate eingesetzt werden.

4. Bindemittel nach Anspruch 1 oder 3, dadurch gekennzeichnet, daß die mehrbasigen Carbonsäuren frei von äthylenischen Doppelbindungen sind und ausgewählt sind aus linearen, verzweigten und cyclischen aliphatischen Carbonsäuren (A111) sowie aromatischen Carbonsäuren (A112) und reaktiven Derivaten beider Klassen.

5. Bindemittel nach Anspruch 4, dadurch gekennzeichnet, daß die mehrbasigen Carbonsäuren ausgewählt sind aus Bernsteinsäure, Adipinsäure, Dodecandisäure und dimeren Fettsäuren; Hexahydroterephthalsäure und -isophthalsäure, Hexahydrophthalsäure sowie Terephthalsäure, Isophthalsäure, Trimellithsäureanhydrid, Pyromellithsäureanhydrid und 2,3- und 2,6-Naphthalindicarbonsäure.

6. Bindemittel nach Anspruch 1 oder 3, dadurch gekennzeichnet, daß bis zu 10 % der Stoffmenge der Polycarbonsäuren (A11) durch Monocarbonsäuren ersetzt sind.

7. Bindemittel nach Anspruch 1, dadurch gekennzeichnet, daß die aliphatischen Polyole (A12) ausgewählt sind aus linearen, verzweigten und cyclischen aliphatischen Dihydroxyverbindungen mit 2 bis 15 Kohlenstoffatomen.

8. Bindemittel nach Anspruch 7, dadurch gekennzeichnet, daß bis zu 5 % der Summe der Stoffmengen der Polyole (A12) ersetzt sind durch drei- und mehrwertige aliphatische Polyole mit 3 bis 15 Kohlenstoffatomen.

9. Bindemittel nach Anspruch 7, dadurch gekennzeichnet, daß die Polyole (A12) ausgewählt sind aus Äthan-1,2-diol, Propan-1,2- und 1,3-diol und Butandiol-1,4.

10. Bindemittel nach Anspruch 8, dadurch gekennzeichnet, daß die drei- und mehrwertigen Polyole ausgewählt sind aus 1,1,1-Trimethylol-äthan und -propan, Pentaerythrit und Dipentaerythrit.

11. Bindemittel nach Anspruch 1, dadurch gekennzeichnet, daß der Polyester (A1) eine Säurezahl von 40 bis 800 mg/g aufweist.

12. Bindemittel nach Anspruch 1, dadurch gekennzeichnet, daß das Verhältnis der Anzahl der Säuregruppen der Komponente (A1) zur Anzahl der Epoxidgruppen der Komponente (A2) 1:10 bis 1:50 beträgt.

13. Bindemittel nach Anspruch 2, dadurch gekennzeichnet, daß das Verhältnis der Anzahl der Säuregruppen der Komponente (A1) zur Anzahl der Epoxidgruppen der Komponente (A2) 1:10 bis 1:50 und das Verhältnis der Anzahl der aromatischen Hydroxylgruppen der Komponente (A3) zur Anzahl der Epoxidgruppen der Komponente (A2) 1:1,1 bis 1:5 beträgt.

14. Bindemittel nach Anspruch 1, dadurch gekennzeichnet, daß anstelle des Polyesters (A1) oder zusätzlich zu dem Polyester (A1) mindestens eine mehrbasige Carbonsäure (A11) verwendet wird.

15. Bindemittel nach Anspruch 1, dadurch gekennzeichnet, daß die Epoxide (A2) ausgewählt sind aus den Glycidyläthern mehrwertiger Phenole, den Glycidyläthern mehrwertiger Alkohole gemäß (A12) und den Glycidylestern mehrbasiger Carbonsäuren gemäß (A11).

16. Bindemittel nach Anspruch 15, dadurch gekennzeichnet, daß die mehrwertigen Phenole ausgewählt sind aus einkernigen Hydroxyaromaten mit mindestens zwei Hydroxylgruppen und mehrkernigen Hydroxyaromaten mit mindestens zwei Hydroxylgruppen, wobei die aromatischen Kerne über eine direkte Bindung, eine Äther-, Thioäther-, Carbonyl-, Sulfon-, Carboxylat- oder Carbonamidbrücke miteinander verbunden sind, und die aromatischen Kerne ausgewählt sind aus Benzol-, Naphthalin- und Anthracen-Kernen.

17. Bindemittel nach Anspruch 16, dadurch gekennzeichnet, daß die mehrwertigen Phenole ausgewählt sind aus Resorcin, Hydrochinon, Bis-4-hydroxyphenylmethan, Bisphenol A und 1,1-Bis-(4-hydroxyphenyl)cyclohexan.

18. Bindemittel nach Anspruch 1, dadurch gekennzeichnet, daß die Epoxide (A2) ausgewählt sind aus Epoxidharzen von Bisphenol A mit einer gewichtsmittleren molaren Masse M_{w} von 340 bis 8000 g/mol und Epoxidharzen von Bisphenol F mit einer gewichtsmittleren molaren Masse M_{w} von 312 bis 8000 g/mol sind.

19. Bindemittel nach Anspruch 1, dadurch gekennzeichnet, daß die Säurezahl des Polyesters (B) 150 bis 800 mg/g beträgt.

20. Verfahren zur Herstellung von Bindemitteln nach Anspruch 1, dadurch gekennzeichnet, daß im ersten Schritt ein Säuregruppen-haltiger Polyester (A1) mehrbasiger Carbonsäuren (A11) und Polyolen (A12) hergestellt wird, dieser Polyester im zweiten Schritt mit einem Epoxidharz (A2) zu einem modifizierten Epoxidharz (A) umgesetzt wird, wobei das Verhältnis der Anzahl der Säuregruppen in (A1) zur Anzahl der Epoxidgruppen in (A2) 1:10 bis 1:50 beträgt, und im dritten Schritt das Epoxidharz (A) mit einem Säuregruppen-haltigen Polyester (B) gemischt wird in einem Massenverhältnis von 95:5 bis 40:60.

21. Verfahren nach Anspruch 20, dadurch gekennzeichnet, daß ein Massenanteil von 5 bis 60 % an Lösungsmitteln, bezogen auf die Summe der Massen von Lösungsmitteln und den Komponenten (A) und (B) eingesetzt wird, ausgewählt aus aprotischen polaren Lösungsmitteln und Mischungen von aliphatischen Alkoholen mit 2 bis 10 Kohlenstoffatomen und aromatischen Kohlenwasserstoffen ausgewählt aus ein- und mehrfach alkylierten Benzolen mit 1 bis 10 Kohlenstoffatomen in der Alkylgruppe.

22. Bindemittel nach Anspruch 1, dadurch gekennzeichnet, daß ein Massenanteil von 0,01 bis 5 % an Katalysatoren, bezogen auf die Summe der Massen der Komponenten (A) und (B) und des Katalysators, eingesetzt wird, wobei die Katalysatoren ausgewählt sind aus Salzen von Lithium, Natrium und Kalium von anorganischen und organischen Säuren.
